# EUROPÄISCHE PATENTSCHRIFT

(11) **EP 0 394 772 B1**
(45) Veröffentlichungstag und Bekanntmachung des Hinweises auf die Patenterteilung: **17.08.1994**
(21) Anmeldenummer: 90107060.7
(22) Anmeldetag: 12.04.1990
(51) Int. Cl.: H04J 14/02, H04N 7/22, H04B 10/12

(54) **Optisches Kabelfernseh-Übertragungssystem**
Television transmission system by optical cable
Système de transmission de télévision par câble optique

(30) Priorität: 25.04.1989 DE 3913520; 07.06.1989 DE 3918530
(43) Veröffentlichungstag der Anmeldung: 31.10.1990
(73) Patentinhaber: Alcatel SEL Aktiengesellschaft, D-70435 Stuttgart (DE)
(72) Erfinder: Heidemann, Rolf, Dr., D-7146 Tamm (DE); Krimmel, Heinz, D-7000 Stuttgart 30 (DE); Wedding, Berthold, Dr., D-7015 Korntal-Münchingen 2 (DE); Matt, Hans Jürgen, Dr., D-7148 Remseck 1 (DE)
(74) Vertreter: Kugler, Hermann, Dipl.-Phys.

(56) Entgegenhaltungen:
- EP-A- 0 316 513
- CH-A- 667 169
- US-A- 4 135 202
- US-A- 4 512 025
- IEEE TRANSACTIONS ON COMMUNICATIONS, Band COM-29, Nr. 6, Juni 1981, New York, Seiten 868-885; H.J. Matt et al.: "Integrated broad-band communication using optical networks-results of an experimental study"
- PROCEEDINGS OF THE IRE, Band 44, Nr. 12, Dezember 1956, New York, Seiten 1667-1675; J.F. HONEY et al.: "An Introduction to Single-Sideband Communications"

## Beschreibung

Die Erfindung betrifft ein System nach dem Oberbegriff des Patentanspruchs 1. Das Problem der Übertragung eines Frequenzmultiplexsignals, das ein breites Frequenzband belegt, stellt sich z.B. bei der Kabelfernseh-Übertragung. Dort müssen eine Vielzahl von Signalen, von denen jedes ein Fernseh- oder Rundfunkprogramm enthält, übertragen werden.

Aus IEEE Transactions on Communications, Vol, COM-29, No. 9, June 1981, Seiten 868 bis 885 ist ein System nach dem Oberbegriff des Patentanspruchs 1 bekannt (Fig. 13 auf Seite 878), bei dem das Frequenzmultiplexsignal aus vier Fernsehsignalen und mehreren Rundfunk-, Fernsprech- und Datensignalen zusammengesetzt ist. Es belegt ein Frequenzband von 54 bis 108 MHz. Das Frequenzmultiplexsignal ist dabei durch Frequenzmodulation verschiedener Träger gebildet, die so gewählt sind, daß sie innerhalb eines nur eine Oktave breiten Bandes liegen.

Für die Anzahl von Fernseh- und Rundfunkprogrammen, die heutzutage in Kabelfernseh-Systemen übertragen werden sollen (mindestens 35 Fernsehprogramme und 30 UKW-Programme), reicht dieses bekannte System nicht aus.

In der älteren europäischen Patentanmeldung Nr. EP-A-386 482 ist vorgeschlagen, das von der sogenannten "KTV-Kopfstation" (KTV = Kabelfernsehen) bereitgestellte Frequenzmultiplexsignal, das ein Frequenzband von 40 bis 440 MHz belegt, ohne irgend eine Umsetzung direkt zur Intensitätsmodulation des Halbleiterlasers zu verwenden.

Es hat sich gezeigt, daß bei einer derartigen Modulation Intermodulationsprodukte 2., 3. und höherer Ordnung entstehen und daß die Produkte 2. Ordnung dominieren. Deshalb darf der Halbleiterlaser nur schwach ausgesteuert werden, was zur Folge hat, daß das System nur wenige dB optische Streckendämpfung toleriert.

Es ist daher die Aufgabe der Erfindung, ein zur optischen Übertragung des vorstehend genannten breitbandigen Frequenzmultiplexsignals geeignetes System zu schaffen.

Die Aufgabe wird wie im Patentanspruch 1 angegeben gelöst. Weiterbildungen ergeben sich aus den Unteransprüchen.

Der wesentliche Vorteil der Erfindung liegt darin, daß das ursprüngliche Frequenzband in ein Frequenzband umgesetzt wird, das bezogen auf seine unterste Frequenz weniger als eine Oktave breit ist. Dadurch haben die Intermodulationsprodukte zweiter Ordnung Frequenzen, die in das nicht belegte Band zwischen den Frequenz 0 und der Trägerfrequenz sowie in Bereiche oberhalb der doppelten Trägerfrequenz fallen und sich daher in der Empfangseinrichtung durch Filter leicht unterdrücken lassen. Infolgedessen läßt sich der Laser stärker aussteuern, und es läßt sich eine größere Streckendämpfung überbrücken. Vorteilhaft ist auch, daß durch die Umsetzung der Signale in das höherfrequente Band Frequenzbänder mit niedrigen Frequenzen frei werden und für andere Telekommunikationsdienste (Fernsprechen, Datenübertragung) auf einfache Weise genutzt werden können.

Die Erfindung wird nun anhand der Zeichnungen durch Beispiele näher erläutert.

Es zeigen:
- Fig. 1: ein Blockschaltbild des erfindungsgemäßen Systems als ein erstes Ausführungsbeispiel,
- Fig. 2: die Signalspektren an verschiedenen Stellen des Blockschaltbildes nach Fig. 1,
- Fig. 3: ein Blockschaltbild des erfindungsgemäßen Systems als ein zweites Ausführungsbeispiel,
- Fig. 4: im Blockschaltbild ein Ausführungsbeispiel der Erfindung, bei dem das Frequenzband in mehreren Teilen in das Übertragungs-Frequenzband umgesetzt wird,
- Fig. 5: ein erstes Ausführungsbeispiel der in Fig. 1 gezeigten Trägerrückgewinnung mit Phasenregelschleife,
- Fig. 6: ein zweites Ausführungsbeispiel der in Fig. 1 gezeigten Trägerrückgewinnung mit einem Filter und einem Trägerverstärker,
- Fig. 7: ein drittes Ausführungsbeispiel der in Fig. 1 gezeigten Trägerrückgewinnunng mit einem injektionssynchronisierten Oszillator,
- Fig. 8: ein Ausführungsbeispiel des erfindungsgemäßen Systems mit einem speziellen Modulator und Demodulator und
- Fig. 9: Signalspektren an verschiedenen Stellen des Systems nach Fig. 8.

Die Erfindung wird im folgenden anhand eines Kabelfernseh-Verteilnetzes beschrieben, jedoch wird darauf hingewiesen, daß sie jegliche Anwendungsfälle umfaßt, bei denen eine Vielzahl von Signalen unterschiedlicher Frequenz, die ein breites Frequenzband belegen, also ein breitbandiges Frequenzmultiplexsignal, von einem Punkt A zu einem oder mehreren Punkten B zu übertragen ist.

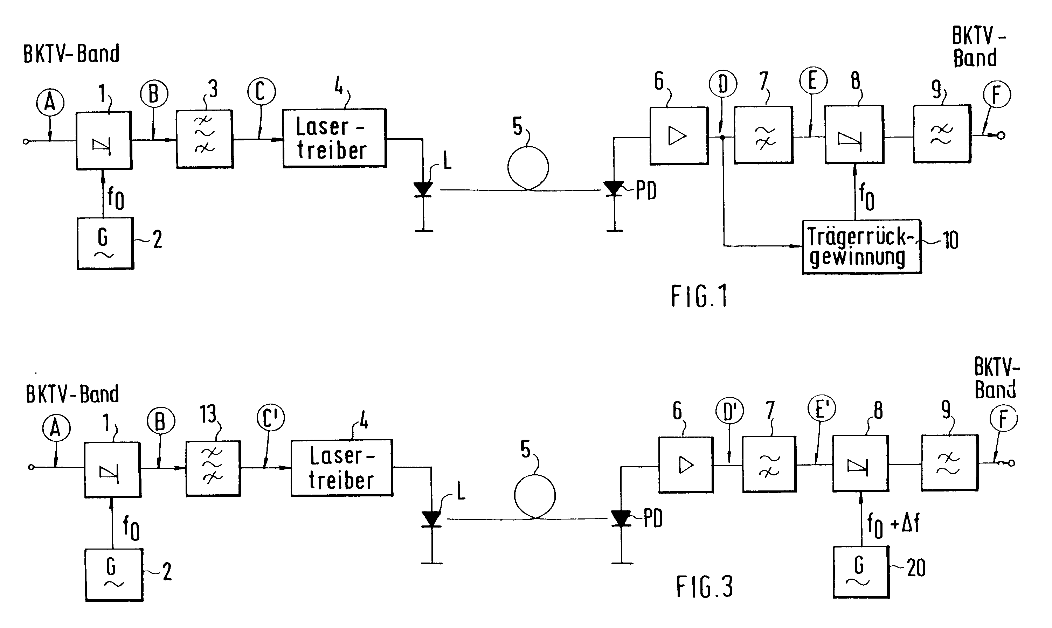

Ein Band von Signalen unterschiedlicher Frequenzen, z.B. für Fernseh- und Hörfunkübertragung nach dem bekannten Frequenzplan des 44 MHz-Koaxialkabel-KTV-Systems der Deutschen Bundespost, mit einer Bandbreite von 40 bis 440 MHz, in den Zeichnungen als BKTV-Band bezeichnet, wird im System nach Fig. 1 auf den Eingang eines Modulators 1 gegeben. Dieer Modulator erhält von einem Trägerfrequenzgenerator 2 einen Trager mit einer Frequenz f₀, im Beispiel mit 800 MHz, und bewirkt zunächst eine Zweiseitenband-Amplitudenmodulation des Trägers. Ein dem Modulator 1 nachgeschaltetes Filter 3 filtert aus dem Ausgangssignal des Modulators das obere Seitenband heraus und gibt dieses auf seinen mit dem Eingang eines Lasertreibers 4 verbundenen Ausgang.

Als "Lasertreiber" ist die übliche Steuerschaltung eines als Lichtquelle für die optische Übertragungsstrecke verwendeten Halbleiterlasers L bezeichnet. Der Lasertreiber sorgt dafür, daß der Halbleiterlaser mit seinem Eingangssignal intensitätsmoduliert wird.

Das Filter 3 ist, wenn es, wie erwähnt, das obere Seitenband durchläßt, ein Bandpaß für das obere Seitenband. Man könnte statt des oberen Seitenbandes auch das untere verwenden. Dann müßte das Filter 3 ein Bandpaß für das untere Seitenband sein. In jedem Falle ist es ein Einseitenband-Filter.

Der Modulator 1, der auch als Mischer bezeichnet werden kann, der Generator 2 und das Einseitenband-Filter 3 bilden also zusammengenommen einen Einseitenband-Amplitudenmodulator. Dieser setzt sein Eingangs-Frequenzband, das BKTV-Band, durch Einseitenband-Amplitudenmodulation eines hochfrequenten Trägers in ein höherfrequentes Band um. Dieses wird im folgenden als Übertragungs-Frequenzband bezeichnet, weil es das zum Zweck der optischen Übertragung gebildete Frequenzband, d.h. das zur Intensitätsmodulation des Halbleiterlasers L verwendete Frequenzband, ist.

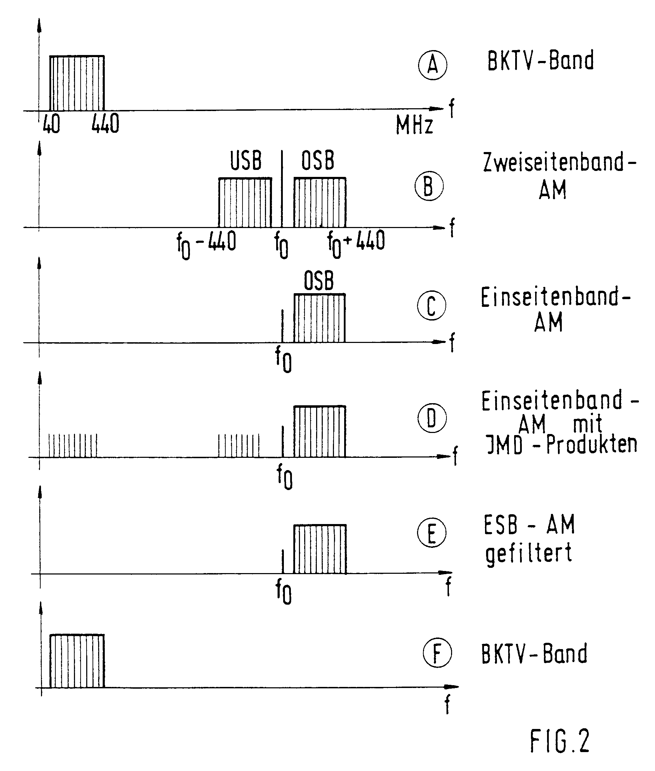

Die Funktion der bisher beschriebenen Sendeeinrichtung nach Fig. 1 wird nun anhand der Fig. 2 eingehender erläutert. Die Fig. 2 zeigt mit großen Buchstaben bezeichnet die Signalspektren, die an verschiedenen mit den entsprechenden Buchstaben bezeichneten Stellen des Blockschaltbilds nach Fig. 1 auftreten. Mit A ist das Spektrum am Eingang des Modulators 1 bezeichnet, das im betrachteten Beispiel eine Bandbreite von 40 bis 440 MHz hat. Durch Mischung mit dem Träger mit der Frequenz f₀ im Modulator 1 ergibt sich zunächst eine Zweiseitenband-Amplitudenmodulation mit einem unteren Frequenzband USB und einem oberen Frequenzband OSB, wie mit dem Spektrum B dargestellt. Bei dieser Modulation kann, je nach Ausführung des Mischers, der Träger unterdrückt werden oder im Ausgangssignal des Modulators noch vorhanden sein. Mit dem Spektrum B ist der letztere Fall gezeigt. Mit C ist das Spektrum am Ausgang des Einseitenband-Filters 3 gezeigt, das nur noch das obere Seitenband enthält, und in dem der Träger abgesenkt ist. Dieses Signalspektrum mit dem Träger wird zur Intensitätsmodulation des Halbleiterlasers L in Fig. 1 verwendet, wenn der Träger zur Empfangseinrichtung mit übertragen werden soll.

Der Halbleiterlaser L des Systems nach Fig. 1 sendet über eine Lichtwellenleiterstrecke 5 ein dem elektrischen Signal mit dem Spektrum C entsprechendes optisches Signal zur Empfangseinrichtung, in der ein optischer Empfänger, bestehend aus einer Fotodiode PD und einem Verstärker 6, das optische Signal in das elektrische Signal umgesetzt, dessen Spektrum in Fig. 2 gezeigt und mit D bezeichnet ist. Dies entspricht dem durch Einseitenband-Amplitudenmodulation entstandenen Spektrum C, enthält jedoch auch Intermodulationsprodukte, wie unterhalb f₀ dargestellt. Um diese zu entfernen, wird das Spektrum C in einem Einseitenband-Filter 7 gefiltert, so daß das Spektrum E entsteht, in dem der Träger, soweit mit vernünftigen Aufwand möglich, unterdrückt ist. Ein Demodulator 8, der auch als Mischer bezeichnet werden könnte, mischt das Spektrum E mit dem Träger f₀, und ein nachgeschalteter Tiefpaß 9 mit einer Grenzfrequenz von 500 MHz ergibt an seinem Ausgang das in das ursprüngliche Frequenzband, das BKTV-Band, rückumgesetzte übertragene Signal, wie es in Fig. 2 als Spektrum F dargestellt ist.

Wie in Fig. 1 gezeigt, wird der für den Demodulator 8 erforderliche Träger f₀ dadurch bereitgestellt, daß er aus dem empfangenen Signal wiedergewonnen wird. Hierzu ist eine Trägerrückgewinnungsschaltung 10 erforderlich, für die an späterer Stelle einige Beispiele gegeben werden. Der Träger f₀ wird dadurch von der Sendeeinrichtung zur Empfangseinrichtung des Systems übertragen, daß er, wie oben erläutert, bei der Einseitenband-Amplitudenmodulation nicht unterdrückt wird. Falls der Modulator 1 und das Einseitenband-Filter aber die Eigenschaft haben, den Träger zu unterdrücken, kann er auch vom Ausgang des Generators 2 abgegriffen, geeignet verstärkt oder gedämpft und dem Ausgangssignal des Einseitenband-Filters 3 hinzuaddiert werden.

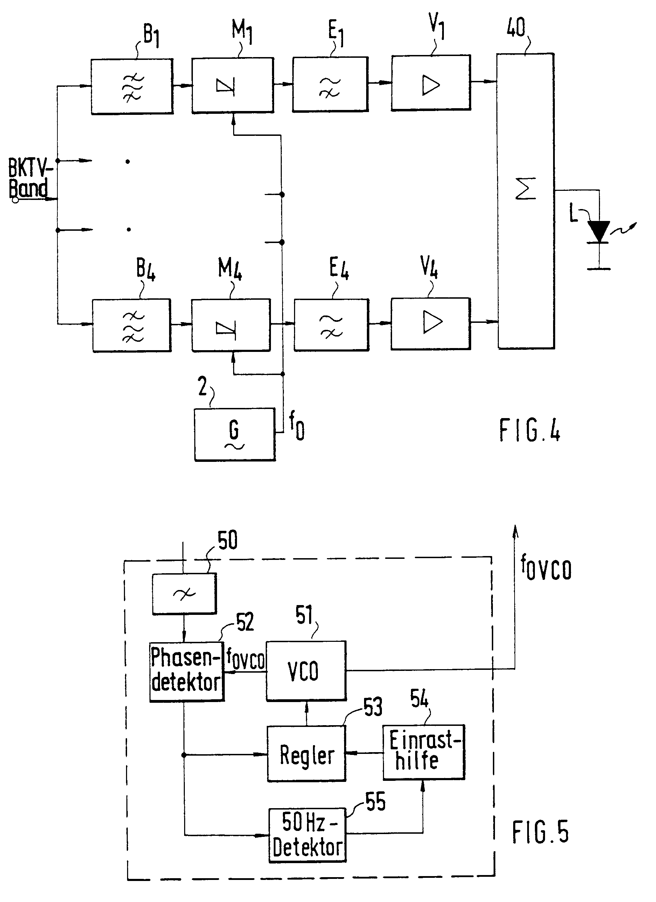

Es gibt auch Anwendungsfälle, bei denen es nicht zwingend notwendig ist, daß das am Ausgang der Empfangseinrichtung (Punkt F in Fig. 3) erscheinende BKTV-Band frequenzmäßig genau mit dem in die Sendeeinrichtung (Punkt A in Fig. 1) eingespeisten BKTV-Band übereinstimmt, sondern eine Frequenzverschiebung um Δf toleriert werden kann. Dies ist z.B. dann der Fall, wenn am Ausgang der Empfangseinrichtung nicht eine weitere Signalverarbeitung, z.B. Modulation, Multiplexbildung usw., zum Zwecke einer anschließenden Fern-Übertragung erfolgen muß, sondern das Frequenzband direkt auf die Endgeräte, für die seine Signale bestimmt sind, z.B. Fernsehempfänger, gegeben wird. Diese Endgeräte tolerieren die Frequenzverschiebung. Auch der Empfänger selbst verträgt eine gewisse Verschiebung der Frequenz oder Phase des Trägers. Daher kann in solchen Fällen auf eine Trägerrückgewinnung vollständig verzichtet werden.

Eine Abwandlung des Systems für solche Fälle ist in Fig. 3 gezeigt. Sie unterscheidet sich von dem System nach Fig. 1 dadurch, daß der Träger nicht aus dem empfangenen Signal wiedergewonnen wird, sondern in der Empfangseinrichtung in einem dort vorhandenen freischwingenden Generator 20 erzeugt wird. Der Generator 20 erzeugt einen Träger, der bis auf eine Ungenauigkeit Δf mit dem von Generator 2 der Sendeeinrichtung erzeugten Träger übereinstimmt. Zweckmäßigerweise wird in der Sendeeinrichtung ein Einseitenband-Filter 13 verwendet, das den Träger so weit wie möglich unterdrückt. An den Punkten C′, D′ und E′ erscheinen Spektren, die sich von den mit den entsprechenden Buchstaben bezeichneten Spektren nach Fig. 2 nur dadurch unterscheiden, daß der Träger fehlt. Im Übrigen unterscheidet sich das System nach Fig. 3 nicht von dem nach Fig. 2 und bedarf daher keiner weiteren Erläuterung.

Ein Ausführungsbeispiel der Erfindung, das die Sendeeinrichtung nach Fig. 1 oder Fig. 3 betrifft, wird nun anhand von Fig. 4 erläutert. Das BKTV-Band wird parallel auf vier verschiedene Bereichsfilter B₁ bis B₄ gegeben, wobei jedes Bereichsfilter einen speziellen Bereich aus dem BKTV-Band herausfiltert. Die Bereiche sind dabei so gewählt, daß die entsprechenden Teilbänder bezogen auf ihre untere Grenzfrequenz weniger als eine Oktave breit sind und daß jedes der im BKTV-Band enthaltenen Signale in einem der Teilbänder liegt. (Unbelegte Bereiche des BKTV-Bandes können unterdrückt werden.) Es wird also das BKTV-Band in vier Teilbänder aufgeteilt. Dabei kann auch die im BKTV-Band vorhandene Unterteilung in Bereiche berücksichtigt werden. Beispielsweise kann durch die Bereichsfilter B₁ bis B₄ das BKTV-Band in die folgenden vier Teilbänder aufgeteilt werden:
Teilband 1 = 47 - 68 MHz
Teilband 2 = 88 - 108 MHz
Teilband 3 = 125 - 230 MHz
Teilband 4 = 230 - 438 MHz

Jedem der Bereichsfilter B₁ bis B₄ ist ein Modulator M₁ bis M₄ nachgeschaltet, der auch als Mischer bezeichnet werden könnte, und der wie anhand von Fig. 1 beschrieben sein Eingangs-Frequenzband mit dem von dem Trägergenerator 2 erzeugten Träger mischt. Dem jeweiligen Modulator ist ein Einseitenband-Filter E₁ bis E₄ nachgeschaltet, das das untere Seitenband unterdrückt.

Jeder Modulator bildet mit dem nachgeschalteten Einseitenband-Filter also einen Modulator, der das ihm zugeführte Frequenzband durch Einseitenband-Amplitudenmodulation des hochfrequenten Trägers in ein höherfrequentes Band umsetzt. Dieses Frequenzband wird mit einem der Verstärker V₁ bis V₄ verstärkt, und alle vier verstärkten Frequenzbänder werden in einem passiven Leistungsaddierer 40 addiert, so daß ein Signalgemisch mit einem Spektrum gemäß dem Spektrum C nach Fig. 2 entsteht. Dieses Signalgemisch wird zur Intensitätsmodulation des Lasers verwendet. Wie anhand von Fig. 1 und Fig. 3 beschrieben, kann auch bei der Sendeeinrichtung nach Fig. 4 der Träger unterdrückt oder durchgelassen oder direkt vom Ausgang des Generators hinzugefügt werden.

Auch die Sendeeinrichtung nach Fig. 4 beruht auf dem anhand von Fig. 1 erläuterten Prinzip der Erfindung, daß das zu übertragende Frequenzband durch Einseitenband-Amplitudenmodulation eines hochfrequenten Trägers in ein Übertragungs-Frequenzband umgesetzt wird. Sie hat nur die Besonderheit, daß das Frequenzband in mehrere Teile zerlegt und dem entsprechend in mehreren Teilen in das Übertragungs-Frequenzband umgesetzt wird.

Der Vorteil der Sendeeinrichtung nach Fig. 4 liegt darin, daß Intermodulationsprodukte zweiter Ordnung irgendeines Signals des Eingangs-Signalgemischs eines Modulators in einem Frequenzbereich liegen, in dem keine weiteren Signale aus dem Eingangs-Signalgemisch desselben Modulators liegen. Kein Eingangssignal eines Modulators kann also mit Intermodulationsprodukten eines anderen Eingangsignals desselben Modulators interferieren.

Ein weiterer Vorteil ist, daß die vier weitgehend voneinander unabhängigen Zweige entsprechend unterschiedlichen Zuverlässigkeits- oder Qualitätsanforderungen ausgestattet werden können. Durch die Aufteilung in mehrere Zweige ist auch ein stufenweiser Ausbau des Systems entsprechend wachsenden Kommunkationsbedürfnissen der angeschlossenen Teilnehmer möglich.

Anhand von Fig. 5 wird nun ein erstes Ausführungsbeispiel der in Fig. 1 als Block dargestellten Trägerrückgewinnungs-Schaltung 10 erläutert. Im wesentlichen ist es eine an sich bekannte Phasenregelschleife (engl.: Phase Locked Loop (PLL)), bestehend aus einem spannungsgesteuerten Oszillator 51 (engl.: Voltage Controlled Oscillator (VCO)), einem Phasendetektor 52 und einem Regler 53. Das Eingangsignal ist das Spektrum gemäß D in Fig. 2, wie es am Ausgang des optischen Empfängers erscheint. Es wird auf den Eingang eines Vorfilters 50 gegeben, welches das Signalspektrum relativ zum Träger um mehr als 10 dB unterdrückt. Hierfür eignet sich ein Oberflächenwellenfilter mittlerer Güte (einige Hundert). Vom Vorfilter 50 empfängt der Phasendetektor 52 das den übertragenen Träger enthaltende Spektrum. Durch Vergleich des vom Vorfilter 50 empfangenen Trägers mit der vom Oszillator 51 erzeugten Schwingung erzeugt er eine Regelgröße für den Regler 53, der daraufhin den Oszillator 51 so steuert, daß die von diesem erzeugte Trägerschwingung in der Frequenz mit dem empfangenen Träger f₀ übereinstimmt.

Die bisher beschriebene Phasenregelschleife ist so zu bemessen, daß eine Restmodulation durch das bei der Frequenz f₀ + 40 MHz liegende Signal sicher unterdrückt ist. Im nicht eingerasteten Zustand der Phasenregelschleife, insbesondere falls die Phasenregelschleife vom Vorfilter 50 kein Eingangssignal empfängt (z.B. bie Unterbrechung der Übertragungsstrecke, bei ausgeschaltetem Sender) könnte der Oszillator 51 mit einer Frequenz schwingen, die in der Nähe der Frequenz des Bildträgers eines bei f₀ + 40 MHz liegenden Fernsehsignals liegt. Der Oszillator könnte sich dann in unerwünschter Weise auf die Frequenz dieses Bildträgers synchronisieren.

Damit dies nicht geschehen kann, ist eine Steuerschaltung 54 vorhanden, die als "Einrasthilfe" bezeichnet werden kann. Diese steuert den Regler 53 der Phasenregelschleife im nicht eingerasteten Zustand so, daß die Frequenz f_{0VCO} des Oszillators 51 in diesem Zustand mit Sicherheit unterhalb der (vorgegebenen) Frequenz f₀ liegt. (Bei Verwendung des unteren Seitenbandes muß f_{0VCO} oberhalb f₀ liegen.) Wenn dann die Phasenregelschleife vom Vorfilter 50 ein Referenzsignal f₀ empfängt, das im Fangbereich der Phasenregelschleife liegt (d.h. wenn die Differenz zwischen f₀ und f_{0VCO} kleiner als der Fangbereich ist), so synchronisiert sie sich auf dieses Referenzsignal f₀, und die vorstehend geschilderte unerwünschte Synchronisation ist ausgeschlossen.

Falls aus irgendwelchen Gründen doch einmal der Phasenregelkreis sich auf einen Bildträger synchronisieren sollte, so entsteht am Ausgang des Phasendetektors 52 ein Signal, bei dem eine Komponente mit 50 Hz (Halbbildfrequenz) dominiert. Hierfür ist ein 50 Hz-Detektor 55 vorhanden, der das Ausgangssignal des Phasendetektors überwacht und, falls er die Komponente feststellt, ein Steuersignal zu der Einrasthilfe 54 gibt, damit diese eine Neusynchronisation veranlaßt.

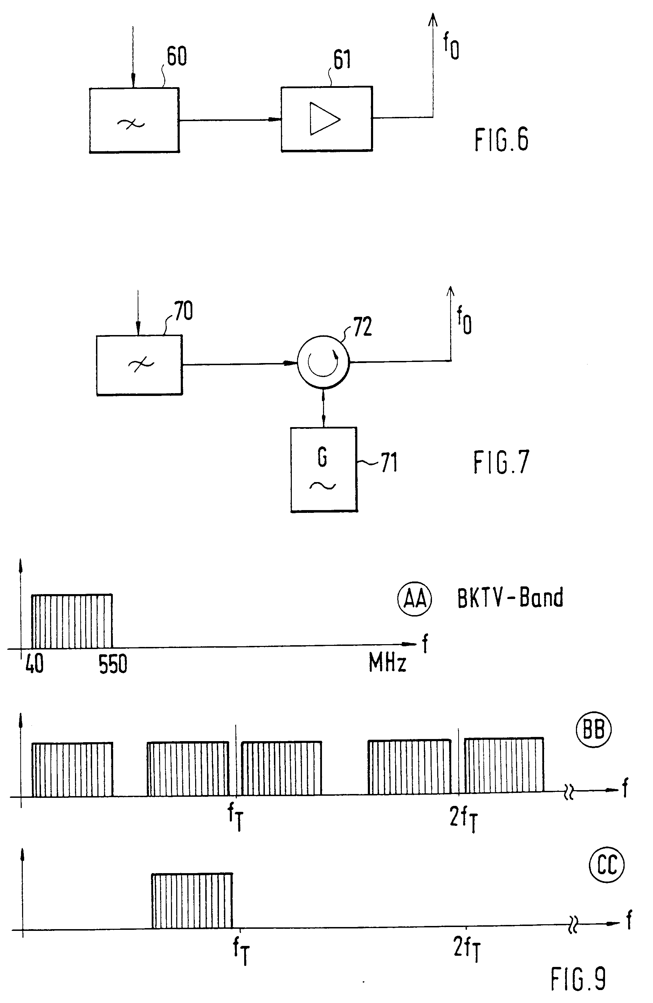

Ein zweites Ausführungsbeispiel einer Trägerrückgewinnungs-Schaltung zeigt Fig. 6. Hier gelangt das den übertragenen Träger enthaltende Spektrum auf ein Filter 60 mit hoher Güte, welches das Restsignal relativ zum Träger f₀ unterdrückt, und ein frequenzselektiver Trägerverstärker 61 verstärkt den in dem Ausgangssignal des Filters 60 enthaltenen Träger. Eine Unterdrückung des Restsignals relativ zum Träger f₀ von mehr als 50 dB läßt sich mit einem Oberflächenwellenfilter und einem selektiven Trägerverstärker erreichen. Diese Schaltung ist wesentlich einfacher als die in Fig. 5, hat jedoch den Nachteil, daß die Toleranz von f₀ in der Sendeeinrichtung sehr gering sein muß und daß das Filter hoher Güte eine hohe Genauigkeit und Alterungsstabilität haben muß.

Ein drittes Beispiel zeigt die Fig. 7. Auch hier gelangt das den übertragenen Träger enthaltende Spektrum auf ein Vorfilter 70, welches das Restsignal relativ zum Träger unterdrückt. Ein durch das Ausgangssignal des Vorfilters 70 und einen Y-Zirkulator 72 synchronisierter Frequenzgenerator 71 wird auf die Frequenz f₀ des empfangenen Trägers synchronisiert. Der Generator 71 bildet zusammen mit dem Y-Zirkulator 72 einen injektionssynchronisierten Oszillator.

Nachstehend werden einige Ergänzungen erläutert. Als Beispiel für eine geeignete Trägerfrequenz f₀ wurde in der bisherigen Beschreibung 800 MHz angegeben. Geeignet ist jede Trägerfrequenz, mit der das zu übertragende Frequenzband in ein Übertragungs-Frequenzband umgesetzt werden kann, das bezogen auf seine unterste Frequenz weniger als eine Oktave breit ist, d.h. bei dem die oberste Frequenz weniger al das Doppelte der untersten Frequenz beträgt.

Das vorstehend beschriebene analoge Vielkanalübertragungssystem unterliegt einer hohen Anforderung an den Signal-Geräusch-Abstand, nämlich mehr als 52 dB. Jegliche Ncihtliniaritäten von Teilen des Systems (Lasertreiber, Halbleiterlaser einschließlich Rückwirkung durch die Lichtwellenleiterstrecke, Empfänger-Eingangsstufe mit rauscharmen Verstärker) sind daher besonders kritisch. Es ist daher wünschenswert, die kritischen Teile des Systems im Betrieb zu überwachen und gegebenenfalls ein Alarmsignal zu erzeugen.

Es ist zu erwarten, daß durch Alterung oder Fehlfunktion von solchen Teilen die Intermodulationsprodukte zweiter Ordnung besonders stark ansteigen. Erfindungsgemäß ist in der Empfangseinrichtung ein Leistungsdetektor für die Intermodulatioonsprodukte vorhanden, der ein Alarmsignal erzeugt, wenn diese einen voreingestellten Schwellenwert überschreiten. Hierdurch ist es vermeidbar, spezielle Pilottöne zur Überwachung des Systems zu übertragen. Zweckmäßigerweise wird als zu überwachendes Signal das Ausgangssignal der Vorverstärkerstufe, auch Eingangstufe genannt, des optischen Empfängers verwendet.

In den vorstehenden Ausführungsbeispielen ist der Modulator, der die Einseitenband-Amplitudenmodulation des Trägers bewirkt, als Mischer mit nachgeschaltetem Einseitenband-Filter dargestellt. Selbstverständlich sind auch andere Arten von Modulatoren, die eine solche Modulation bewirken, geeignet, z.B. ein nach der sogenannten Phasenmethode oder ein nach dem Pilotton-Verfahren (Verfahren nach Weaver) arbeitender Modulator, wie sie z.B. in Meinke-Gundlach: "Taschenbuch der Hochfrequenztechnik", 4. Auflage, Band 3, Springer-Verlag Berlin, Heidelberg, New York, Tokyo, 1986, Seiten 01 bis 06 erläutert sind.

Jede Art von Modulatoren, die eine Einseitenband-Amplitudenmodulation eines Trägers bewirkt ist als "Modulator", im Sinne der Erfindung zu betrachten.

Zusätzlich zu den vorstehend ausdrücklich genannten Modulatoren/Demodulatoren wird im folgenden ein weiterer anzugeben, der ebenfalls dazu geeignet ist, ein Frequenzband in eine andere Frequenzlage umzusetzen.

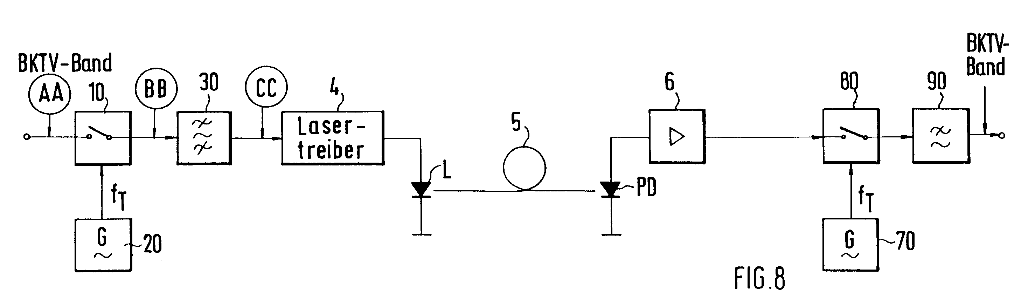

Das System nach der Erfindung mit einem solchen Modulator und Demodulator wird im folgenden anhand der Fig. 8 erläutert.

Das Band von Signalen unterschiedlicher Frequenz mit einer Bandbreite von z.B. 40 bis 450 MHz, in den Zeichnungen als BKTV-Band bezeichnet, wird im System nach Fig. 8 auf den Eingang eines Abtasters 10 gegeben. Dieser Abtaster erhält von einem Trägerfrequenzgenerator 20 einen Träger mit einer Frequenz f_{T}, z.B. 1,2 GHz, der den Abtaster so steuert, daß er sein Eingangssignal mit der Frequenz f_{T} abtastet. Ein dem Abtaster 10 nachgeschaltetes Bandfilter 30 filtert aus dem Ausgangssignal des Abtasters das zur Übertragung geeignete Frequenzband heraus, wobei es alle anderen unerwünschten Frequenzen unterdrückt, und gibt es auf seinen mit dem Eingang eines Lasertreibers 4 verbundenen Ausgang.

Als "Lasertreiber" ist die übliche Steuerschaltung eines als Lichtquelle für die optische Übertragungsstrecke verwendeten Halbleiterlasers L bezeichnet. Der Lasertreiber sorgt dafür, daß der Halbleiterlaser mit seinem Eingangssignal intensitätsmoduliert wird.

Der Abtaster 10, der Generator 20 und das Filter 30 bilden zusammen einen Frequenzlagen-Umsetzer, hier auch Einseitenband-Amplitudenmodulator genannt. Dieser setzt sein Eingangs-Frequenzband, das BKTV-Band, durch den Abtastvorgang mit Hilfe eines hochfrequenten Trägers in ein höherfrequentes Band um, wobei das Filter die Frequenzen mit der gewünschten Frequenzlage durchläßt und alle anderen Frequenzen unterdrückt. Dieses wird im folgenden als Übertragungs-Frequenzband bezeichnet, weil es das zum Zweck der optischen Übertragung gebildete Frequenzband, d.h. das zur Intensitätsmodulation des Halbleiterlasers L verwendete Frequenzband, ist. Die Funktion der bisher beschriebenen Sendeeinrichtung nach Fig. 8 wird nun anhand der Fig. 9 eingehender erläutert.

Die Fig. 9 zeigt mit großen Buchstaben bezeichnet die Signalspektren, die an verschiedenen, mit den entsprechenden Buchstaben bezeichneten Stellen des Systems nach Fig. 8 auftreten. Mit AA ist das Spektrum am Eingang des Abtasters 10 bezeichnet, das im betrachteten Beispiel eine Bandbreite von 40 bis 550 MHz hat.

Nach dem bekannten Abtasttheorem von Nyquist und C. E. Shannon für ein frequenzband-begrenztes Signal bewirkt eine Abtastung des Eingangssignals mit dem Spektrum AA mit der Abtastfrequenz f_{T}, daß ein Ausgangssignal entsteht, das ein Spektrum aufweist, wie es mit BB in Fig. 9 dargestellt ist. Dieses enthält nicht nur das Spektrum des Eingangssignals, sondern weitere, jeweils symmetrisch zu Vielfachen der Frequenz f_{T} liegende Frequenzbänder. Damit die Frequenzbänder nicht überlappen, ist die Abtastfrequenz f_{T} so zu wählen, daß sie mehr als das Doppelte der höchsten Frequenz (550 MHz) des abgetasteten Frequenzbandes beträgt. Aus diesem Spektrum BB filtert das Bandfilter 30 das zur Übertragung geeignete Frequenzband, das sogenannte Übertragungs-Frequenzband aus, im gezeigten Beispiel ist dies das Seitenband unterhalb der Abtastfrequenz f_{T}, also das Frequenzband von ca. 600 bis 1150 MHz. Dieses ist in Fig. 9 als das Spektrum CC dargestellt und wird in dem System nach Fig. 8 zur Intensitätsmodulation des Halbleiterlasers L verwendet.

Der Halbleiterlaser L des Systems nach Fig. 8 sendet über eine Lichtwellenleiterstrecke 5 ein dem elektrischen Signal mit dem Spektrum CC entsprechendes optisches Signal zur Empfangseinrichtung, in der ein optischer Empfänger, bestehend aus einer Fotodiode PD und einem Verstärker 6, das optische Signal in ein entsprechendes elektrisches Signal umsetzt. Ein Abtaster 80, der ebenfalls mit einer Frequenz f_{T} betrieben wird, die ein Generator 70 liefert, tastet das vom Verstärker 6 ausgegebene elektrische Signal ab, und ein nachgeschaltetes Tiefpaßfilter 90 ergibt an seinem Ausgang das in das ursprüngliche Frequenzband, das BKTV-Band, rückumgesetzte übertragene Signal. Auf der Empfangsseite des Systems nach Fig. 8 ist der Abtaster 80 zusammen mit dem Generator 70 und dem Tiefpaßfilter 90 als Demodulator zu betrachten.

Durch die Verwendung von Abtastern in der Sendeeinrichtung und in der Empfangseinrichtung des Systems ist dafür gesorgt, daß bei der Modulation und Demodulation kaum Nichtlinearitäten vorhanden sind und daher auch keine oder nur geringfügige Intermodulationsprodukte entstehen können.

Aus Kostengründen kann man auch an einer Seite des Systems, z.B. empfangsseitig, anstelle eines Abtasters einen Mischer zur Rückumsetzung des übertragenen Frequenzbandes verwenden.

Die anhand der Figuren 8 und 9 beschriebene Modulation hat die Eigenschaft, daß der Träger systematisch unterdrückt wird. Sie ist daher vorzugsweise auf die Variante des oben genannten Systems anwendbar, bei der der Träger bei der Modulation unterdrückt und für die Übertragung nicht wieder hinzugesetzt wird.

Im Bedarfsfall kann der Träger nach dem Filter 30 mit geeignetem Pegel dem Übertragungs-Frequenzband hinzugefügt, d.h. zusammen mit diesem übertragen werden.

## Patentansprüche

1. System zur optischen Übertragung eines ein breites Frequenzband belegenden Frequenzmultiplexsignals, mit einer Sendeeinrichtung, die einen in der Intensität modulierbaren Halbleiterlaser (L) enthält, und mit einer Empfangseinrichtung, die das übertragene optische Signal wieder in das Frequenzmultiplexsignal umsetzt,
**dadurch gekennzeichnet,**
- daß die Sendeeinrichtung einen Modulator (1, 2, 3; Bᵢ, Mᵢ, Eᵢ) enthält, der das Frequenzband (A) durch Einseitenband-Amplitudenmodulation eines Trägers (f₀) in ein Übertragungs-Frequenzband (C) umsetzt,
- daß das durch die Modulation gebildete Übertragungs-Frequenzband (C, C'), bezogen auf seine unterste Frequenz, weniger als eine Oktave breit ist,
- daß die Sendeeinrichtung (1, 2, 3, 4, L) Mittel (4) enthält, um den Halbleiterlaser (L) durch das Übertragungs-Frequenzband (C) und wahlweise auch durch den Träger (f₀) in der Intensität zu modulieren, und
- daß die Empfangseinrichtung einen Demodulator (7, 8, 9) zur Rückumsetzung des Übertragungs-Frequenzbandes (C) in das ursprüngliche Frequenzband (A) enthält.

2. System nach Anspruch 1, dadurch gekennzeichnet, daß der Modulator (1, 2, 3) der Sendeeinrichtung den Träger bei der Modulation nicht unterdrückt, oder bei der Modulation unterdrückt, jedoch seinem Ausgangssignal hinzufügt, und daß die Empfangseinrichtung eine Trägerrückgewinnungsschaltung (10) enthält, die aus dem empfangenen Signal den Träger (f₀) rückgewinnt und in den Demodulator (8, 9) zur Rückumsetzung des Übertragungs-Frequenzbandes (C) eingibt (Fig. 1).

3. System nach Anspruch 1, dadurch gekennzeichnet, daß der Modulator (1, 2, 3) der Sendeeinrichtung den Träger (f₀) bei der Modulation unterdrückt und die Sendeeinrichtung keinen Träger zur Empfangseinrichtung sendet und daß die Empfangseinrichtung einen Trägergenerator (20) hat, der einen Träger, dessen Frequenz der des in der Sendeeinrichtung verwendeten Trägers gleich ist, für den Demodulator (8) zur Rückumsetzung des Übertragungs-Frequenzbandes (C′) erzeugt (Fig. 3).

4. System nach einem der vorstehenden Ansprüche, dadurch gekennzeichnet, daß der Modulator (B₁ bis B₄, M₁ bis M₄, E₁ bis E₄, V₁ bis V₄, 40) der Sendeeinrichtung das zu übertragende Frequenzband (A) in mehreren Teilen durch Einseitenband-Amplitudenmodulation in das Übertragungs-Frequenzband umsetzt (Fig. 4).

5. System nach Anspruch 4, dadurch gekennzeichnet, daß die Sendeeinrichtung mehrere Filter (B₁ bis B₄) enthält, die das zu übertragende Frequenzband (A) in mehrere Teilbänder aufteilen, daß der Modulator der Sendeinrichtung aus mehreren Modulatoren (M₁, E₁ bis M₄, E₄) besteht, die die Teilbänder durch Einseitenband-Amplitudenmodulation in mehrere höherfrequente Bänder umsetzen und daß die Sendeeinrichtung einen Addierer (40) enthält, der durch Addition der mehreren höherfrequenten Bänder das Übertragungsfrequenzband (C) bildet, das den Halbleiterlaser (L) intensitätsmoduliert (Fig. 4).

6. System nach Anspruch 5, dadurch gekennzeichnet, daß jedes der Teilbänder bezogen auf seine unterste Frequenz weniger als eine Oktave breit ist.

7. System nach einem der Ansprüche 2 und 4 bis 6, dadurch gekennzeichnet, daß die Trägerrückgewinnungsschaltung (10) eine Phasenregelschleife (51, 52, 53) enthält, und eine Steuerschaltung (54), die die Phasenregelschleife zu Beginn eines Synchronisiervorgangs zur Vermeidung einer Fehlsynchronisation so steuert, daß ihr Oszillator mit einer vorgegebenen Frequenz schwingt (Fig. 5).

8. System nach Anspruch 7, dadurch gekennzeichnet, daß die Trägerrückgewinnungsschaltung einen Detektor (55) für ein bei Fehlsynchronisation entstehendes Modulationsprodukt hat, der, falls er dieses Modulationsprodukt feststellt, an die Steuerschaltung (54) ein eine Neusynchronisation auslösendes Signal gibt (Fig. 5).

9. System nach einem der Ansprüche 2 und 4 bis 6, dadurch gekennzeichnet, daß die Trägerrückgewinnungsschaltung (10) aus einem Filter (60) hoher Güte für den Träger und einem Trägerverstärker (61) besteht (Fig. 6).

10. System nach einem der Ansprüche 2 und 4 bis 6, dadurch gekennzeichnet, daß die Trägerrückgewinnungsschaltung aus einem Filter (70) für den Träger und einem injektionssynchronisierten Oszillator (71, 72) besteht (Fig. 7).

11. System nach einem der vorstehenden Ansprüche, dadurch gekennzeichnet, daß die Empfangseinrichtung einen Detektor für aufgrund von Nichtlinearitäten im System auftretende Intermodulationsprodukte hat, dem das Ausgangssignal des optischen Empfängers oder das von dessen Eingangstufe eingegeben wird und der, wenn die Intermodulationsprodukte einen vorgegebenen Schwellenwert überschreiten, ein Alarmsignal abgibt.

12. System nach einem der Ansprüche 1 bis 5, dadurch gekennzeichnet, daß der Modulator oder der Demodulator aus einem mit der Frequenz des Trägers (f_{T}) betätigten Abtaster (10, 80) und einem diesem nachgeschalteten Filter (30, 90) besteht.

## Claims

1. A system for optically transmitting a frequency-division multiplex signal occupying a broad frequency band, with a transmitter unit comprising an intensity-modulated semiconductor laser (L) and with a receiver unit which reconverts the transmitted optical signal into the frequency-division multiplex signal,
**characterized in**
- that the transmitter unit includes a modulator (1, 2, 3; Bᵢ, Mᵢ, Eᵢ) which converts the frequency band (A) to a transmission frequency band (C) by single-sideband amplitude modulation of a carrier (f₀),
- that the transmission frequency band (C, C') formed by the modulation is less than one octave wide related to its lowest frequency,
- that the transmitter unit (1, 2, 3, 4, L) includes means (4) for intensity-modulating the semiconductor laser (L) by the transmission frequency band (C) or the carrier (F₀) alternatively, and
- that the receiver unit includes a demodulator (7, 8, 9) for reconverting the transmission frequency band (C) to the original frequency band (A).

2. A system as claimed in claim 1, characterized in that the modulator (1, 2, 3) of the transmitter unit does not suppress the carrier during modulation, or suppresses the carrier during modulation but adds it to its output signal, and that the receiver unit includes a carrier recovery circuit (10) which recovers the carrier (f₀) from the received signal and feeds it to the demodulator (8, 9) for reconverting the transmission frequency band (C) (Fig. 1).

3. A system as claimed in claim 1, characterized in that the modulator (1, 2, 3) of the transmitter unit suppresses the carrier (f₀) during modulation and the transmitter unit transmits no carrier to the receiver unit, and that the receiver unit includes a carrier generator (20) in which a carrier having the same frequency as the carrier used in the transmitter unit is generated for the demodulator (8) for reconverting the transmission frequency band (C') (Fig. 3).

4. A system as claimed in any one of the preceding claims, characterized in that the modulator (B₁ to B₄, M₁ to M₄, E₁ to E₄, V₁ to V₄, 40) of the transmitter unit converts the frequency band to be transmitted (A) to the transmission frequency band in several parts by single-sideband amplitude modulation (Fig. 4).

5. A system as claimed in claim 4, characterized in that the transmitter unit includes several filters (B₁ to B₄) which divide the frequency band to be transmitted (A) into several subbands, that the modulator of the transmitter unit consists of several modulators (M₁, E₁ to M₄, E₄) which convert the subbands to higher-frequency bands by single-sideband amplitude modulation, and that the transmitter unit includes a combiner (40) which combines the several higher-frequency bands to form the transmission frequency band (C), which intensity-modulates the semiconductor laser (L) (Fig. 4).

6. A system as claimed in claim 5, characterized in that related to its lowest frequency, each of the subbands is less than one octave wide.

7. A system as claimed in any one of claims 2 and 4 to 6, characterized in that the carrier recovery circuit (10) includes a phase-locked loop (51, 52, 53) and a control circuit (54) which, to avoid incorrect synchronization, controls the phase-locked loop at the beginning of a synchronization process in such a way that the oscillator of the phase-locked loop oscillates at a predetermined frequency (Fig. 5).

8. A system as claimed in claim 7, characterized in that the carrier recovery circuit includes a detector (55) for a modulated signal formed in case of incorrect synchronization which, when detecting said modulated signal, delivers to the control circuit (54) a signal initiating a resynchronization (Fig. 5).

9. A system as claimed in any one of claims 2 and 4 to 6, characterized in that the carrier recovery circuit (10) consists of a high-Q filter (60) for the carrier and a carrier amplifier (61) (Fig. 6).

10. A system as claimed in any one of claims 2 and 4 to 6, characterized in that the carrier recovery circuit consists of a filter (70) for the carrier and an injection-locked oscillator (71, 72) (Fig. 7).

11. A system as claimed in any one of the preceding claims, characterized in that the receiver unit includes a detector for intermodulation products caused by non-linearities which is fed with the output signal from the optical receiver unit or from the input stage thereof, and which provides an alarm signal when the intermodulation products exceed a predetermined threshold value.

12. A system as claimed in any one of claims 1 to 5, characterized in that the modulator or demodulator consists of a sampler (10, 80) followed by a filter (30, 90), said sampler being operated at the frequency of the carrier (f_{T}).

## Revendications

1. Système de transmission optique d'un signal multiplexé en fréquence et occupant une large bande de fréquence, comportant un dispositif émetteur qui contient un laser à semi-conducteur (L) modulable en intensité, ainsi qu'un dispositif récepteur qui convertit à nouveau le signal optique transmis en le signal multiplexé en fréquence,
système caractérisé
- par le fait que le dispositif émetteur contient un modulateur (1, 2, 3; Bᵢ, Mᵢ, Eᵢ) qui, par modulation d'amplitude à bande latérale unique d'une porteuse (f₀), convertit la bande de fréquence (A) en une bande de fréquence de transmission (C),
- par le fait que la bande de fréquence de transmission (C, C') formée par la modulation, rapporté à sa fréquence la plus basse, présente une largeur inférieure à une octave,
- par le fait que le dispositif émetteur (1, 2, 3, 4, L) contient des moyens (4) pour moduler en intensité le laser à semi-conducteur (L) au moyen de la bande de fréquence de transmission (C) et, à la demande, également au moyen de la porteuse (f₀) et
- par le fait que le dispositif émetteur contient un démodulateur (7, 8, 9) pour reconvertir la bande de fréquence de transmission (C) en la bande de fréquence d'origine (A).

2. Système selon la revendication 1, caractérisé par le fait que le modulateur (1, 2, 3) du dispositif émetteur n'atténue pas la porteuse lors de la modulation ou l'atténue, mais l'ajoute néanmoins à son signal de sortie, et par le fait que le dispositif émetteur contient un circuit (10) de récupération de la porteuse qui récupère la porteuse (f₀) à partir du signal reçu et l'envoie dans le démodulateur (8, 9) pour reconversion de la bande de fréquence de transmission (C) (figure 1).

3. Système selon la revendication 1, caractérisé par le fait que le modulateur (1, 2, 3) du dispositif émetteur atténue la porteuse (f₀) lors de la modulation et que ce dispositif émetteur n'envoie pas la porteuse au dispositif récepteur et par le fait que le dispositif récepteur comporte un générateur de porteuse (20) qui produit, pour le démodulateur (8), pour la reconversion de la bande de fréquence de transmission C', une porteuse dont la fréquence est égale à celle de la porteuse employée dans le dispositif émetteur.

4. Système selon l'une des revendications précédentes, caractérisé par le fait que le modulateur (B₁ à B₄, M₁ à M₄, E₁ à E₄, V₁ à V₄, 40) du dispositif émetteur convertit la bande de fréquence (A) à transmettre, en plusieurs parties, par modulation d'amplitude à bande latérale unique, en la bande de fréquence de transmission (figure 4).

5. Système selon la revendication 4, caractérisé par le fait que le dispositif émetteur contient plusieurs filtres (B₁ à B₄) qui divisent la bande de fréquence à transmettre (A) en plusieurs bandes partielles, par le fait que le modulateur du dispositif émetteur est constitué de plusieurs modulateurs (M₁, E₁ à M₄, E₄) qui, par modulation d'amplitude à bande latérale unique, convertissent les bandes partielles en plusieurs bandes de fréquence plus élevée et par le fait que le dispositif émetteur contient un additionneur (40) qui, par addition des différentes bandes de fréquence plus élevée, forme la bande de fréquence de transmission (C) qui module en intensité le laser à semi-conducteur (L) (figure 4).

6. Système selon la revendication 5, caractérisé par le fait que chacune des bandes partielles, rapporté à sa fréquence la plus basse, a une largeur inférieure à une octave.

7. Système selon l'une des revendications 2 et 4 à 6, caractérisé par le fait que le circuit (10) de récupération de la porteuse contient une boucle de régulation de phase (51, 52, 53) et un circuit de commande (54) qui, au début d'un processus de synchronisation et pour éviter une synchronisation défectueuse, commande la boucle de régulation de phase de façon que son oscillateur oscille à une fréquence prescrite (figure 5).

8. Système selon la revendication 7, caractérisé par le fait que le circuit de récupération de la porteuse comporte un détecteur (55) pour détecter un produit qui apparait en cas de synchronisation défectueuse, détecteur qui, dans le cas où il détermine ce produit de modulation, envoie au circuit de commande (54) un signal qui déclenche une nouvelle synchronisation (figure 5).

9. Système selon l'une des revendications 2 et 4 à 6, caractérisé par le fait que le circuit (10) de récupération de la porteuse est constitué d'un filtre (60) de haute qualité pour la porteuse et d'un amplificateur de la porteuse (61) (figure 6).

10. Système selon l'une des revendications 2 et 4 à 6, caractérisé par le fait que le circuit de récupération de la porteuse est constitué d'un filtre (70) pour la porteuse et d'un oscillateur synchronisé par injection (71, 72) (figure 7).

11. Système selon l'une des revendications précédentes, caractérisé par le fait que le dispositif récepteur comporte un détecteur pour détecter des produits d'intermodulation survenant dans le système par suite de non-linéarités, détecteur auquel on fournit le signal de sortie du récepteur optique ou celui de son étage d'entrée et qui émet un signal d'alarme lorsque les produits d'intermodulation dépassent une valeur de seuil prescrite.

12. Système selon l'une des revendications 1 à 5, caractérisé par le fait que le modulateur ou le démodulateur est constitué d'un dispositif à échantillononer (10, 80) qui opère à la fréquence de la porteuse (f_{T}) et d'un filtre (30, 90) monté en aval de ce dispositif.
